# EUROPÄISCHE PATENTSCHRIFT

(11) **EP 2 493 676 B1**
(45) Veröffentlichungstag und Bekanntmachung des Hinweises auf die Patenterteilung: **11.12.2013**
(21) Anmeldenummer: 10768948.1
(22) Anmeldetag: 26.10.2010
(51) Int. Cl.: B29C 67/00, B29C 67/04, C08G 2/08, C08G 2/10, C08L 59/02, C08L 59/04, C08J 9/12, C08J 9/24, C08G 2/28, B29K 59/00

(54) **LASERSINTERPULVER AUS POLYOXYMETHYLEN, VERFAHREN ZU DESSEN HERSTELLUNG UND FORMKÖRPER, HERGESTELLT AUS DIESEM LASERSINTERPULVER**
LASER SINTERING POWDER MADE OF POLYOXYMETHYLENE, METHOD FOR THE PRODUCTION THEREOF, AND MOLDED PARTS MANUFACTURED USING SAID LASER SINTERING POWDER
POUDRE DE FRITTAGE LASER À BASE DE POLYOXYMÉTHYLÈNE, PROCÉDÉ DE FABRICATION DE CETTE POUDRE ET CORPS FAÇONNÉS FABRIQUÉS AVEC CETTE POUDRE DE FRITTAGE LASER

(30) Priorität: 27.10.2009 EP 09174163
(43) Veröffentlichungstag der Anmeldung: 05.09.2012
(73) Patentinhaber: BASF SE, 67056 Ludwigshafen (DE)
(72) Erfinder: DALLNER, Claus, 68159 Mannheim (DE); FUNKHAUSER, Steffen, 68519 Viernheim (DE); MÜLLER, Frank, 67069 Ludwigshafen (DE); DEMETER, Jürgen, 55128 Mainz (DE); VÖLKEL, Mark, 68526 Ladenburg (DE)
(86) Internationale Anmeldenummer: PCT/EP2010/066107
(87) Internationale Veröffentlichungsnummer: WO 2011/051250

(56) Entgegenhaltungen:
- WO-A2-96/06881
- RIETZEL D ET AL: "New thermoplastic powder for selective laser sintering", KUNSTSTOFFE INTERNATIONAL, CARL HANSER VERLAG, DE, Bd. 98, Nr. 2, 1. Januar 2008 (2008-01-01) , Seiten 42-45, XP009143239, ISSN: 0945-0084 in der Anmeldung erwähnt

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Die Verfahren sind auch für die Herstellung von Kleinserien geeignet.

Die Erfindung betrifft ein Pulver aus Polyoxymethlen (POM) zur Verwendung in einem Selektiven Lasersinterverfahren, ein Verfahren zu dessen Herstellung sowie Formkörper, hergestellt aus diesem Pulver durch einen Selektiven Lasersinterprozess.

Ein Verfahren, welches besonders gut für den Zweck des Rapid Prototypings geeignet ist, ist das selektive Laser-Sintern (SLS). Bei diesem Verfahren werden Kunststoffpulver oder mit Kunststoff ummantelte Metall-, oder Keramikpulver, oder mit Kunststoff ummantelter Sand in einer Kammer selektiv kurz mit einem Laserstrahl belichtet, wodurch die Pulver-Partikel, die von dem Laserstrahl getroffen werden, schmelzen. Die geschmolzenen Partikel verlaufen ineinander und erstarren schnell wieder zu einer festen Masse. Durch wiederholtes Belichten von immer neu aufgebrachten Schichten können mit diesem Verfahren dreidimensionale Körper auch komplexer Geometrie einfach und schnell hergestellt werden.

Das Verfahren des Laser-Sinterns (Rapid Prototyping) zur Darstellung von Formkörpern aus pulverförmigen Polymeren wird ausführlich in den Schriften US 6,136,948 und WO 96/06881 (beide DTM Corporation) beschrieben. Eine Vielzahl von Polymeren und Copolymeren kann für diese Anwendung eingesetzt werden, wie z.B. Polyacetat, Polypropylen, Polyethylen, Ionomere und Polyamid. Voraussetzung für die Verarbeitung im SLS ist, dass der Werkstoff als feines Pulver vorliegt.

In der Praxis wird beim Laser-Sintern vor allem Polyamid 12-Pulver (PA 12) für die Herstellung von Formkörpern verwendet (DE-A 4421454, EP-A 0 911 142). Andere thermoplastische Werkstoffe wie etwa Polystyrol oder Polycarbonat sind zwar pulverförmig erhältlich, liefern jedoch Bauteile mit großer Porosität und schlechten mechanischen Eigenschaften.

Nachteilig an den derzeit eingesetzten Polyamid-Pulvern sind häufig ebenfalls die unbefriedigenden mechanischen Eigenschaften sowie die Glasübergangstemperatur im oft anwendungsrelevanten Bereich von ca. 60°C. Weiterhin treten bei den Formkörpern Vergilbungen auf. Diese können nachträglich am fertigen Bauteil entstehen, sofern die Bauteile starker Bestrahlung mit UV-haltigem Licht oder auch langer direkter Sonneneinstrahlung ausgesetzt werden.

Ein gelblicher Farbstich kann aber auch bereits durch die lange und starke thermische Belastung beim Lasersintern selbst entstehen. Dieser Effekt wird insbesondere dann beobachtet, wenn große Anteile an Rückpulver, welches ein Laser-Sinter-Pulver ist, das bereits eingesetzt, aber dabei nicht aufgeschmolzen wurde, verwendet werden. Mit der Vergilbung geht häufig eine Verschlechterung der mechanischen Eigenschaften einher, da es zur Alterung des Materials kommt. Die Alterung kann sich z.B. durch eine Versprödung, eine Abnahme der Reißdehnung oder eine Abnahme der Kerbschlagzähigkeit bemerkbar machen.

In dem US-Patent 5,342,919 werden Lasersinterpulver aus Polyamid, Polybutylenterephthalat oder Polyacetal und deren Verwendung zur Herstellung von Formteilen durch SLS beschrieben. Die mittlere Teilchengröße von mehr als 80% des Pulvers ist < 53 µm und die restlichen Teilchen haben eine Größe von 53 bis 180 µm. Das Zahlenmittel des Polymers beträgt 30.000 bis 500.000 und die Molekulargewichtsverteilung M_{w}/Mₙ beträgt 1 bis 5. Die Formteile zeichnen sich durch eine nur geringe Porosität im Vergleich zu dichten nicht porösen Spritzgussartikeln aus.

Rietzel et al. (Kunststoffe 2/2008, S. 65-86) berichten über Kunststoffpulver aus POM für das SLS und über daraus durch SLS hergestellte Bauteile. Das POM Sinterpulver wird durch kryogenes Mahlen von käuflich erhältlichen teilkristallinen Thermoplasten in Granulatform erhalten, wobei eine hohe Ausbeute an Partikeln unter 100 µm angestrebt wurde. Im Vergleich zu Zugstäben aus dem kommerziell erhältlichen Lasersinterpulver PA 2200 (Hersteller: EOS GmbH, Krailling) weisen Zugstäbe aus diesem POM-Lasersinterpulver bei niedrigerer Bruchdehnung eine höhere Festigkeit auf.

Die mechanischen Eigenschaften des von Rietzel et al. beschriebenen POM-Sinterpulvers wie z.B. die Bruchdehnung sind jedoch weiterhin verbesserungsbedürftig. Nachteilig ist auch die nicht zufrieden stellende Rieselfähigkeit dieses POM-Sinterpulvers.

Aufgabe der vorliegenden Erfindung ist es ein Pulver für selektives Lasersintern bereitzustellen, das eine verbesserte Rieselfähigkeit aufweist und durch dessen Verwendung im SLS-Verfahren Formkörper bzw. Bauteile mit verbesserten mechanischen Eigenschaften hergestellt werden können.

Es wurde nun gefunden, dass diese Aufgabe durch ein spezielles Polyoxymethylen-Pulver gelöst werden kann.

Gegenstand der Erfindung ist ein Pulver aus POM für selektives Lasersintern, dadurch gekennzeichnet, dass das Pulver die folgenden Parameter aufweist:

| | |
|---|---|
| isotherme Kristallisationszeit bei 152 °C | > 3 min |
| Mn | 22000 - 25000 g/mol |
| Mw | 60000 - 140000 g/mol |
| Mw/Mn | 3 - 5 |
| MVR | 15 - 70 cm³/10 min |
| Mittlere Teilchengröße d50 | 60 µm |
| Teilchengröße | 30 - 130 µm. |

Die isotherme Kristallisationszeit wurde mittels DSC nach der DIN 53765 bestimmt. Die Molmasse (Zahlenmittel Mn und Gewichtsmittel Mw) wurde durch Größenausschlusschromatographie in Hexafluorisopropanol und 0,05% Trifluoressigsäure-Kaliumsalz als Lösungsmittel bestimmt, wobei mit PMMA-Standards kalibriert wurde. Die MVR (Schmelzevolumenrate) wurde bei 190°C für 2,16 kg ermittelt gemäß ISO 1133. Die Teilchengröße wurde durch ein Laserbeugungsspektrometer ermittelt.

Bevorzugt weist das erfindungsgemäße POM-Pulver ein Gewichtsmittel Mw von 85000 - 105000 g/mol. Das Verhältnis Mw/Mn beträgt bevorzugt 3,7 bis 4,5. Die MVR beträgt bevorzugt 30 - 50 [cm³/10 min]. Weiterhin ist bevorzugt, dass die Teilchengröße des Pulvers 40 bis 100 µm, besonders bevorzugt 60 bis 80 µm, beträgt. Die isotherme Kristallisationszeit bei 152°C ist im Allgemeinen größer 3 Minuten und bevorzugt größer 5 Minuten.

Das erfindungsgemäße Pulver kann gegebenenfalls Additive wie zumindest einen Hilfsstoff, zumindest einen Füllstoff und/oder zumindest ein Pigment aufweisen. Solche Hilfsstoffe können z.B. Rieselhilfsmittel, wie z.B. pyrogenes Siliziumdioxid oder auch gefällte Kieselsäure sein. Pyrogenes Siliziumdioxid (pyrogene Kieselsäure) wird zum Beispiel unter dem Produktnamen Aerosil^{®}, mit unterschiedlichen Spezifikationen, durch die Degussa AG angeboten. Vorzugsweise weist erfindungsgemäßes Pulver weniger als 3 Massen-%, vorzugsweise 0,001 bis 2 Massen-% und ganz besonders bevorzugt 0,05 bis 1 Massen-% solcher Zusatzstoffe bezogen auf die Gesamtsumme des Polyoxymethylens auf. Die Füllstoffe können z.B. Glas-, Metall-, insbesondere Aluminium- oder Keramikpartikel, wie z.B. massive oder hohle Glaskugeln, Stahlkugeln, Aluminiumkugeln oder Metallgrieß oder auch Buntpigmente, wie z.B. Übergangsmetalloxide sein. Weitere Zusatzmittel können Stabilisatoren, Absorber oder Flammschutzmittel sein.

Die Füllstoffpartikel weisen dabei vorzugsweise eine kleinere oder ungefähr gleich große mittlere Korngröße wie die POM-Partikel auf. Vorzugsweise sollte die mittlere Korngröße d50 der Füllstoffe die mittlere Korngröße d50 des POM um nicht mehr als 20 %, vorzugsweise um nicht mehr als 15 % und ganz besonders bevorzugt um nicht mehr als 5 % unterschreiten. Die Partikelgröße ist nach oben insbesondere durch die Schichtdicke und nach unten durch das Herstellverfahren sowie bei zu kleinen Partikeln die zu hohe adhäsive Wechselwirkung und somit geringe Rieselfähigkeit limitiert.

Die Additive werden durch Mischen in das POM-Pulver eingebracht. Grundsätzlich sind dazu alle Arten von Mischern geeignet; bevorzugt wird ein Schnellmischer verwendet, der eine hohe Scherung während der Mischung ermöglicht und somit die Mischdauer (weniger als 45 Minuten) erheblich verkürzt.

Weiterer Gegenstand der Erfindung ist ein Verfahren zur Herstellung des erfindungsgemäßen Pulvers, das dadurch gekennzeichnet ist, dass eine Polyoxymethylenformmasse, charakterisiert durch die folgenden Parameter:

| | |
|---|---|
| isotherme Kristallisationszeit bei 152 °C | > 3 min |
| Mn | 22000 - 25000 g/mol |
| Mw | 60000 - 140000 g/mol |
| Mw/Mn | 3 - 5 |
| MVR | 15 - 70 cm³/10 min; |

zunächst einer Kaltmahlung unterzogen wird,
dann von dem erhaltenen POM-Mahlgut der Grob- und Feinanteil abgetrennt und der POM-Nutzanteil von Teilchen der Größe 30 - 130 µm erhalten wird.

Unter Polyoxymethylen ist ein Polyoxymethylenhomo oder -copolymerisat zu verstehen. Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im Allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten -CH₂O noch bis zu 50, vorzugsweise 0,1 bis 20, insbesondere 0,3 bis 10 mol-% und ganz besonders bevorzugt 0,2 bis 2,5 mol-% an wiederkehrenden Einheiten aufweisen, 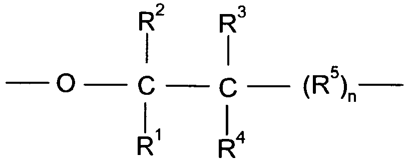 wobei R¹ bis R⁴ unabhängig voneinander ein Wasserstoffatom, eine C₁-C₄-Alkylgruppe oder eine halogensubstituierte Alkylgruppe mit 1 bis 4 C-Atomen und R⁵ eine -CH₂-, CH₂O-, eine C₁-C₄-Alkyl- oder C₁-C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 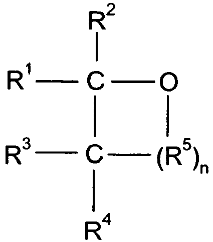 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 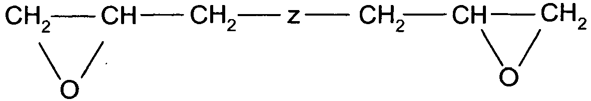 und/oder 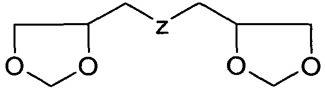 wobei Z eine chemische Bindung, -O-, -ORO- (R = C₁-bis C₈-Alkylen oder C₃-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhaltnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so dass sich hier nähere Angaben erübrigen.

Das Molekulargewicht der vorstehend beschriebenen Homo- und Copolymerisate lässt sich durch Einsatz von Acetalen des Formaldehyds (Kettenüberträger) einstellen. Diese führen auch zum Entstehen von veretherten Endgruppen des Polymeren, so dass eine separate Umsetzung mit Verkappungsreagenzien entbehrlich ist.

Als Kettenüberträger werden monomere oder oligomere Acetale des Formaldehyds eingesetzt.

Bevorzugte Kettenüberträger sind Verbindungen der Formel

R¹-(O-CH₂)q-O-R²,

worin R¹ und R² unabhängig voneinander einwertige organische Reste, vorzugsweise Alkylreste, wie Butyl, Propyl, Ethyl und Methyl, und q eine ganze Zahl von 1 bis 100 bedeuten.

Besonders bevorzugte Kettenüberträger sind Verbindungen der vorgenannten Formel, worin q = 1 ist, ganz besonders bevorzugt sind Butylal, Propylal, Ethylal und Methylal,.

Die Kettenüberträger werden üblicherweise in Mengen von bis zu 5.000 ppm, vorzugsweise von 100 bis 3.000 ppm, bezogen auf das Monomer(gemisch), eingesetzt.

Das POM kann bis zu 50 Gew.-% (bezogen auf 100 Gew.-% POM) sonstiger Additive enthalten.

Geeignete Additive sind beispielsweise:
- Talkum,
- Polyamide, insbesondere Mischpolyamide,
- Erdalkalisilikate und Erdalkaliglycerophosphate,
- Ester oder Amide gesättigter aliphatischer Carbonsäuren,
- Ether, die sich von Alkoholen und Ethylenoxid ableiten,
- unpolare Polypropylenwachse,
- Nukleierungsmittel,
- Füllstoffe wie Glasfasern, Nanotubes, Wollastonit, Kreide, vorzugsweise mit Borsäure oder deren Derivaten als Synergisten,
- schlagzäh modifizierende Polymere, insbesondere solche auf Basis von Ethylen-Propylen (EPM)- oder Ethylen-Propylen-Dien (EPDM)-Kautschuken oder thermoplastischen Polyurethanen,
- Flammschutzmittel,
- Weichmacher,
- Haftvermittler,
- Farbstoffe und Pigmente,
- weitere Formaldehyd-Fänger, Zeolithe oder Polyethylenimine, oder MelaminFormaldehyd-Kondensate,
- Antioxidantien, insbesondere solche mit phenolischer Struktur, Benzophenonderivate, Benzotriazolderivate, Acrylate, Benzoate, Oxanilide und sterisch gehinderte Amine (HALS = hindered amine light stabilizers).

Diese Zusatzstoffe sind bekannt und beispielsweise in Gächter/Müller, Plastics Additives Handbook, Hanser Verlag München, 4. Auflage1993, Reprint 1996 beschrieben.

Die Menge der Additive hängt vom verwendeten Additiv und der gewünschten Wirkung ab. Dem Fachmann sind die üblichen Mengen bekannt. Die Additive werden, falls mitverwendet, in üblicher Weise zugefügt, beispielsweise einzeln oder gemeinsam, als solche, als Lösung bzw. Suspension oder bevorzugt als Masterbatch.

Man kann die POM-Formmasse in einem einzigen Schritt herstellen, indem z.B. man das POM und gegebenenfalls die Additive in einem Extruder, Kneter, Mischer oder einer anderen geeigneten Mischvorrichtung unter Aufschmelzen des POM vermischt, die Mischung austrägt und anschließend üblicherweise granuliert. Jedoch hat es sich als vorteilhaft erwiesen, einige oder alle der Komponenten zunächst in einem Trockenmischer oder einem anderen Mischapparat "kalt" vorzumischen und die erhaltene Mischung in einem zweiten Schritt unter Aufschmelzen des POM - ggf. unter Zugabe weiterer Komponenten - in einem Extruder oder sonstigen Mischvorrichtung zu homogenisieren. Insbesondere kann es vorteilhaft sein, zumindest das POM und das Antioxidans (falls mitverwendet) vorzumischen.

Die POM-Formmasse kann als Chips, Pulver, Perlen, Linsen, bevorzugt als Granulat eingesetzt werden.

Die für die Kaltmahlung als Aufgabegut verwendete POM-Formmasse wird bevorzugt in Granulatform eingesetzt. Die Kaltmahlung als solche, auch Kryogenmahlung, genannt, ist bekannt (z.B. DE 4421454 A1). Erfindungsgemäß wird bei Temperaturen von -20 bis -80 °C, vorzugsweise bei -30 bis -60 °C, gearbeitet. Die Kühlung kann beispielsweise mit Hilfe von flüssigem Stickstoff erfolgen. Dabei ist es vorteilhaft bereits das Aufgabegut beispielsweise auf Temperaturen von -130 bis -110°C zu kühlen, wodurch eine homogene Kühlung auch in der Mühle erreicht wird.

Die Kaltmahlung der POM-Formmasse erfolgt im Allgemeinen mit einer Rotormühle, wobei zur Erzielung von einer mittleren Teilchengröße von 60 µm eine gegenläufige Stiftmühle bevorzugt eingesetzt wird. Bei der gegenläufigen Stiftmühle handelt es sich um eine Rotormühle, deren Mahlscheiben mit konzentrisch angeordneten Stiften besetzt sind. Da beide Scheiben rotieren, sind Umdrehungsgeschwindigkeiten von mindestens 200 bis zu 250 m/s zu erzielen. Eine geeignete Stiftmühle ist zum Beispiel das Modell Contraplex 160 C der Firma Hosokawa Alpine GmbH. Nach der Kaltmahlung hat das Mahlgut im Allgemeinen eine mittlere Teilchengröße d50 von 60 µm. Von dem Mahlgut werden Teilchen mit einer Größe von kleiner 30 µm (Feinanteil) und Teilchen mit einer Größe von größer 130 µm (Grobanteil) abgetrennt, wobei im Allgemeinen in 2 Schritten zunächst der Grob- und dann der Feinanteil abgetrennt wird. Die Fraktionierung des Mahlguts kann beispielsweise durch eine Siebung mit einer Taumelsiebmaschine (nur für Grobanteil geeignet) oder vorzugsweise durch Windsichtung mit einem Abweiserad-Windsichter erfolgen. Geeignet ist zum Beispiel ein Micron Windsichter des Typs MS-1 der Firma Hosokawa.

Weiterer Gegenstand der Erfindung ist die Verwendung des erfindungsgemäßen Pulvers zur Herstellung von Formkörpern durch selektives Lasersintern sowie Formkörper, hergestellt durch ein SLS-Verfahren unter Verwendung des erfindungsgemäßen POM-Pulvers.

Die selektiven Laser-Sinter-Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, verschmolzen werden. Während des Fertigungsprozesses wird schichtweise das Polymerpulver aufgetragen, das innerhalb der Schnittfläche mit dem Bauteil liegende Pulver mit dem Laserstrahl selektiv aufgeschmolzen und mit der darunter liegenden Schmelzeschicht fest verbunden. Das nicht aufgeschmolzene Pulver stützt die erzeugte Schmelze ab. Es bildet so die Form für das schmelzeförmige Bauteil. Durch die aufeinanderfolgende Versinterung von Schichten von Polymerpartikeln werden dreidimensionale Objekte hergestellt. Wenn alle Schichten des Bauteils erzeugt sind, wird der Pulverkuchen mit den innen liegenden Bauteilen abgekühlt und die Bauteile erstarren. Nach dem Bauprozess kann das umliegende Pulver entfernt werden und das Bauteil Nachbehandlungsschritten wie z. B. dem Glaskugelstrahlen, Trowalisieren und Lackieren zugeführt werden. Einzelheiten zum Verfahren des selektiven Laser-Sinterns sind z.B. den Schriften US 6,136,948 und WO 96/06881 zu entnehmen.

Üblicherweise wird für das SLS- Verfahren ein CO₂-Laser verwendet, welcher auch vorteilhaft zur Herstellung der erfindungsgemäßen Formkörper aus POM eingesetzt wird, da POM bei der Wellenlänge des CO₂-Lasers (λ = 10,6 µm) einen Großteil der eingebrachten Energie absorbiert. Die Schichtdicke des erfindungsgemäßen POM-Pulvers beträgt bevorzugt 0,08 bis 0,20 mm. Die zum SLS des erfindungsgemäßen POM-Pulvers eingesetzte Laserleistung beträgt vorzugsweise 7-10 W. Die Scanweite, d.h. der Linienabstand des Lasers, beträgt vorzugsweise 0,08 bis 0,15 mm.

Gemäß einer bevorzugten Ausführungsform wird der SLS-Prozess isotherm, das heißt Schmelze und Pulver können nebeneinander vorliegen, durchgeführt, das heißt der Bauprozess findet in einem Zweiphasenmischzustand statt. Dabei wird dem erfindungsgemäßen POM-Pulver lediglich die zum Überschreiten des Phasenübergangs fest-flüssig notwendige Energie zugeführt Die geeignete Bauraumtemperatur für das erfindungsgemäße POM-Pulvers beträgt 152 bis 154°C. Die so mittels SLS aus dem erfindungsgemäßen POM-Pulver erhaltenen Formkörper erreichen ähnliche mechanische Eigenschaften bezüglich der Festigkeit und dem E-Modul wie spritzgegossene Probekörper. Diese Formkörper finden insbesondere Verwendung als Prototypen von Bauteilen.

### Beispiele

### Beispiel 1

### Pulverherstellung

Zur Herstellung des erfindungsgemäßen Pulvers wurde ein copolymeres Polyoxymethylengranulat (Schüttdichte von ca. 850 g/l), aufweisend eine MVR (bei 190°C, 2.16 kg gemäß ISO 1133) von 42 cm³, Mn = 23000 g/mol, Mw = 97000 g/mol, Mw/Mn = 4.2 und eine isotherme Kristallisationszeit von 3.5 Minuten bei 152°C, eingesetzt. Das POM-Granulat wurde über eine Dosier- und Förderstrecke auf -120 °C gekühlt und dann bei tiefen Temperaturen (-50 °C) in einer gegenläufigen Stiftmühle des Typs Hosokawa Alpine Contraplex 160 C mit einer Rotorgeschwindigkeit von 202 m/s auf eine Teilchengröße von maximal 250 µm vermahlen. Das Mahlgut wurde dann zur Grob-und Feingutabtrennung einer Windsichtung mit einem Abweiserad-Windsichter des Typs MS-1 der Firma Hosokawa unterzogen.

Die Teilchengröße wurde durch ein Laserbeugungsspektrometer des Typs Mastersizer S von Malvern Instruments Ltd. ermittelt.

Der Anteil des Nutzguts, das heißt der gewünschten Fraktion von Teilchengrößen von 30 bis 130 µm bzw. 40 bis 100 µm, betrug 94% bzw. 82%. Das so erhaltene Pulver wies eine mittlere Teilchengröße von 60 µm auf.

### Herstellung von Zugstäben

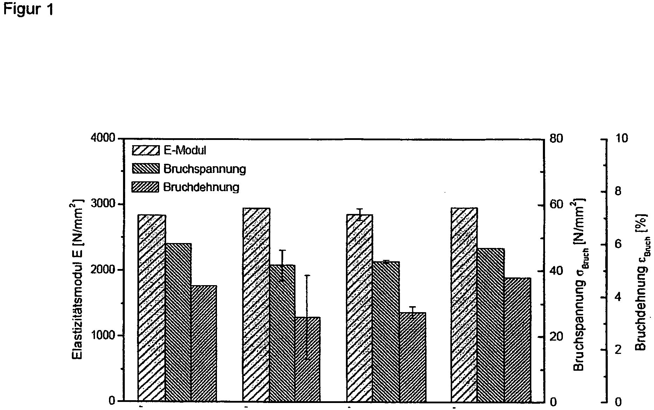

Ein 20x20 cm oben offener Kasten wurde mit einem Boden versehen, der über eine Spindel verstellbar ist. Der Boden wurde bis auf einen halben Zentimeter an die obere Kante bewegt; der verbliebene Raum wurde mit dem erfindungsgemäßen POM-Pulver gefüllt und mit einem Rakel glattgestrichen. Die Schichtdicke betrug 0,1 mm. Die Apparatur wurde in den Bauraum einer CO₂-Lasersinteranlage der Firma 3DSystems gestellt, und es wurden die Konturen von 3 liegend gebauten Zugstäben (Schulterstäbe nach DIN EN ISO 3167 Typ A) pro Schicht in die Pulverschicht gelasert. Die Bauraumtemperatur betrug 154°C. Es wurden Versuchsreihen V1 bis V4 mit verschiedener Laserleistung und Scanweite des Lasers durchgeführt (siehe Figur 1). Die nächsten Schritte, Drehung der Spindel zum Absenken des Bodens um 0,1 mm sowie Auftrag der nächsten Pulverschicht, glatt streichen und anschließend erneutes Belichten durch den CO₂-Laser zum Aufschmelzen des Pulvers, wurden einige Male wiederholt. Nach dem Abkühlen der Versuchsanordnung konnten die Zugstäbe für die nachfolgenden Zugversuche verwendet werden.

### Bauteilprüfung

Die Zugversuche wurden nach DIN EN ISO 527-1, -2 durchgeführt. Die Abzugsgeschwindigkeit betrug 5 mm/min.

Figur 1 zeigt die mechanischen Eigenschaften der Zugstäbe, die aus dem lasergesinterten POM-Pulver gemäß Beispiel 1 hergestellt wurden.

Die Laserleistung (Pₗₐₛₑᵣ [W], Pₒᵤₜ[W]) und der Linienabstand des Lasers (z_{scan} [mm]) betrug in den Beispielen V1 bis V4:
Pₗₐₛₑᵣ [W], Pₒᵤₜ[W], Zscan [mm]
V1: 2x5 W; 4,5 W; 0,15 mm
V2: 9 W; 4,5 W; 0,08 mm
V3: 9 W; 4,5 W; 0,15 mm
V4: 10 W; 4,5 W; 0,08 mm

Figur 1 zeigt, dass Zugstäbe aus dem erfindungsgemäßen POM-Pulver eine deutlich verbesserte Bruchdehnung gegenüber POM-Proben gemäß dem Stand der Technik [Rietzel et al. (Kunststoffe 2/2008, S. 67)] aufweisen. Die Bruchdehnung von Zugstäben gemäß V3 liegt mit ca. 5 % etwa doppelt so hoch.

## Patentansprüche

1. Pulver aus Polxoxymethylen für selektives Lasersintern, **dadurch gekennzeichnet, dass** das Pulver die folgenden Parameter aufweist:
| | |
|---|---|
| isotherme Kristallisationszeit bei 152 °C | > 3 min |
| Mn | 22000 - 25000 g/mol |
| Mw | 60000 - 140000 g/mol |
| Mw/Mn | 3 - 5 |
| MVR | 15 - 70 cm³/10 min |
| Mittlere Teilchengröße d50 | 60 µm |
| Teilchengröße | 30 - 130 µm. |

2. Pulver nach Anspruch 1, **dadurch gekennzeichnet, dass** die MVR 30 - 50 cm³/10 min beträgt.

3. Pulver nach Anspruch 1 oder 2, **dadurch gekennzeichnet, dass** die Teilchengröße des Pulvers 40 bis 100 µm beträgt.

4. Pulver nach einem der Ansprüche 1 bis 3, **dadurch gekennzeichnet, dass** Mw 85000 bis 105000 g/mol ist und das Verhältnis Mw/Mn 3,7 bis 4,5 beträgt.

5. Verfahren zur Herstellung des Pulvers nach einem der Ansprüche 1 bis 4, das **dadurch gekennzeichnet ist, dass** eine Polyoxymethylenformmasse, charakterisiert durch die folgenden Parameter:
| | |
|---|---|
| isotherme Kristallisationszeit bei 152 °C | > 3 min |
| Mn | 22000 - 25000 g/mol |
| Mw | 60000 - 140000 g/mol |
| Mw/Mn | 3 - 5 |
| MVR | 15 - 70 cm³/10 min; |
zunächst einer Kaltmahlung unterzogen wird,
dann von dem erhaltenen POM-Mahlgut der Grob- und Feinanteil abgetrennt und der POM-Nutzanteil von Teilchen der Größe 30 - 130 µm erhalten wird.

6. Verfahren gemäß Anspruch 5, **dadurch gekennzeichnet, dass** die Kaltmahlung mit einer gegenläufigen Stiftmühle und die Abtrennung des Grob- und Feinanteils von dem erhaltenen Mahlgut durch Windsichtung mit einem Abweiserad-Windsichter erfolgen.

7. Verwendung des Pulvers gemäß einem der Ansprüche 1 bis 4 zur Herstellung von Formkörpern durch selektives Lasersintern.

8. Formkörper, hergestellt durch ein SLS-Verfahren unter Verwendung des POM-Pulvers gemäß einem der Ansprüche 1 bis 4.

## Claims

1. A polyoxymethylene powder which is intended for selective laser sintering and which has the following parameters:
| | |
|---|---|
| Isothermal crystallization time at 152°C | > 3 min |
| Mn | from 22 000 to 25 000 g/mol |
| Mw | from 60 000 to 140 000 g/mol |
| Mw/Mn | from 3 to 5 |
| MVR | from 15 to 70 cm³/10 min |
| d50 average particle size | 60 µm |
| Particle size | from 30 to 130 µm. |

2. The powder according to claim 1, wherein the MVR is from 30 to 50 cm³/10 min.

3. The powder according to claim 1 or 2, the particle size of which is from 40 to 100 µm.

4. The powder according to any of claims 1 to 3, wherein Mw is from 85 000 to 105 000 g/mol and the Mw/Mn ratio is from 3.7 to 4.5.

5. A process for producing the powder according to any of claims 1 to 4, which comprises firstly carrying out low-temperature grinding of a polyoxymethylene molding composition **characterized by** the following parameters:
| | |
|---|---|
| Isothermal crystallization time at 152°C | > 3 min |
| Mn | from 22 000 to 25 000 g/mol |
| Mw | from 60 000 to 140 000 g/mol |
| Mw/Mn | from 3 to 5 |
| MVR | from 15 to 70 cm³/10 min; |
and then removing the coarse fraction and the fines from the resultant ground POM, and obtaining the useful POM fraction of particles of size from 30 to 130 µm.

6. The process according to claim 5, wherein the low-temperature grinding process uses a contrarotating pin mill, and the removal of the coarse fraction and the fines from the resultant ground product is achieved by pneumatic separation, using a pneumatic separator with a deflector wheel.

7. The use of the powder according to any of claims 1 to 4 for producing moldings by selective laser sintering.

8. A molding, produced by an SLS process, using the POM powder according to any of claims 1 to 4.

## Revendications

1. Poudre de polyoxyméthylène pour le frittage sélectif au laser (FSL), **caractérisée en ce que** la poudre présente les paramètres suivants :
| | |
|---|---|
| Temps de cristallisation isotherme à 152°C | > 3 min |
| Mn | 22 000-25 000 g/mole |
| Mw | 60 000-140 000 g/mole |
| Mw/Mn | 3-5 |
| MVR (indice de fluidité volumique) | 15-70 cm³/10 min |
| Grosseur moyenne des particules d50 | 60 µm |
| Grosseur des particules : | 30-130 µm. |

2. Poudre selon la revendication 1, **caractérisée en ce que** le MVR vaut 30-50 cm³/10 min.

3. Poudre selon la revendication 1 ou 2, **caractérisée en ce que** la grosseur des particules de la poudre vaut 40 à 100 µm.

4. Poudre selon l'une quelconque des revendications 1 à 3, **caractérisée en ce que** Mw vaut 85 000 à 105 000 g/mole et le rapport Mw/Mn vaut 3,7 à 4,5.

5. Procédé pour la préparation de la poudre selon l'une quelconque des revendications 1 à 4, qui est **caractérisé en ce qu'**une masse de moulage en polyoxyméthylène, **caractérisée par** les paramètres suivants :
| | |
|---|---|
| Temps de cristallisation isotherme à 152°C | > 3 min |
| Mn | 22 000-25 000 g/mole |
| Mw | 60 000-140 000 g/mole |
| Mw/Mn | 3-5 |
| MVR | 15-70 cm³/10 min ; |
est d'abord soumise à un broyage à froid,
puis les proportions de grosses et de fines sont séparées du produit broyé en POM et la proportion utile de POM de particules d'une grosseur de 30-130 µm est obtenue.

6. Procédé selon la revendication 5, **caractérisé en ce que** le broyage à froid est réalisé à l'aide d'un broyeur à broches tournant en sens opposé et la séparation de la proportion de grosses et de fines du produit broyé obtenu est réalisée par séparation à air à l'aide d'un sélecteur pneumatique équipé d'une roue déflectrice.

7. Utilisation de la poudre selon l'une quelconque des revendications 1 à 4 pour la production de corps façonnés par frittage sélectif au laser.

8. Corps façonnés produits par un procédé FSL en utilisant la poudre de POM selon l'une quelconque des revendications 1 à 4.
